# FASCICULE DE BREVET EUROPEEN

(11) **EP 1 975 021 B1**
(45) Date de publication et mention de la délivrance du brevet: **21.10.2009**
(21) Numéro de dépôt: 08152396.1
(22) Date de dépôt: 06.03.2008
(51) Int. Cl.: B60S 1/52

(54) **Dispositif de lavage d'une surface transparente ou réfléchissante notamment la glace d'un projecteur d'un véhicule automobile**
Vorrichtung zum Reinigen einer transparenten oder spiegelnden Oberfläche, insbesondere des Scheinwerferglases eines Kraftfahrzeugs
Device for washing a transparent or reflecting surface, in particular the glass of an automobile headlight

(30) Priorité: 26.03.2007 FR 0702149
(43) Date de publication de la demande: 01.10.2008
(73) Titulaire: VALEO VISION, 93012 Bobigny (FR)
(72) Inventeur: Penet, Jean-Claude, 77400, Lagny sur Marne (FR); Puibaraud, Antoine, 92100 Boulogne Billancourt (FR)

(56) Documents cités:
- DE-U1- 9 108 956
- US-A- 5 605 286
- US-A- 5 762 271

## Description

L'invention concerne un dispositif de lavage pour une surface transparente ou réfléchissante, notamment la glace de projecteur d'un véhicule automobile. L'invention concerne également un projecteur et un véhicule équipés d'un tel dispositif de lavage.

Ce genre de dispositif de lavage est utilisé de manière courante dans le domaine de l'automobile pour nettoyer les glaces de projecteurs au cours de la circulation du véhicule. Il comprend une ou plusieurs buses ou gicleurs alimentés en liquide de lavage sous pression. Ces buses ou gicleurs sont placés en avant de la glace du projecteur à une distance déterminée, et ils projettent le liquide en direction de la glace du projecteur pour effectuer son nettoyage.

Il est connu de monter les buses ou gicleurs à l'extrémité de la tige d'un organe télescopique intégré dans le véhicule, notamment le pare-choc ou la calandre. Un tel mode de construction est décrit par exemple dans la demande de brevet EP581672. Les gicleurs sont montés sur un porte-gicleur qui est assemblé à l'extrémité de la tige d'un vérin. Le vérin comprend un corps qui est fixé au véhicule, et une tige coulissante qui traverse la paroi du pare-choc. Le vérin est alimenté par le liquide de lavage qui est canalisé jusqu'aux gicleurs. La sortie de la tige se produit avec la mise en route de la pompe sous l'action de la pression du liquide. Un ressort de rappel comprimé par le mouvement de sortie de la tige assure la rentrée de la tige une fois le lavage terminé. Dans cette position rentrée, un capot de fermeture associé au porte-gicleur obture le logement que la tige traverse. Le capot est plaqué contre le pare-choc par la compression résiduelle du ressort de rappel.

Eventuellement un dispositif à clapet commande l'alimentation des gicleurs en liquide de lavage seulement lorsque la tige est sortie. La demande de brevet FR2836842 décrit un dispositif de ce genre.

Ce mode de construction donne de bons résultats. Toutefois il n'est pas totalement satisfaisant. En effet il peut arriver que le liquide de lavage gèle. Ceci peut se produire par exemple en cas de stationnement prolongé du véhicule à l'extérieur, sous une température inférieure à zéro degré, alors que le liquide de lavage n'est pas protégé contre le gel.

En gelant, le liquide qui reste au fond de l'organe télescopique augmente de volume. En augmentant de volume il provoque la sortie de la tige et le soulèvement du capot de fermeture. Des essais ont montré que dans de telles circonstances la tige pouvait ressortir sur une course allant jusqu'à 20 millimètres.

La sortie d'un porte-gicleur place les gicleurs et le capot en saillie par rapport au reste du pare-choc. Outre l'aspect inesthétique, ces éléments sont davantage exposés en cas de choc du véhicule. C'est à dire qu'en cas de choc ils sont plus vulnérables et qu'eux-mêmes peuvent provoquer plus de dégâts.

Le brevet US 5 605 286 décrit un dispositif de lavage selon le préambule de la revendication 1.

Le brevet US4508957 propose une solution qui consiste à réchauffer le liquide de lavage à l'aide d'organes électriques de chauffage alimentés par la batterie du véhicule. Cette solution de chauffage n'est toutefois pas satisfaisante pour une installation de lavage qui comprend un ou plusieurs organes télescopiques compte tenu du volume d'eau important qui se trouve en aval de la pompe.

Compte tenu de cet état de la technique, il existe un besoin pour un dispositif de lavage qui est amélioré en ce qu'il est mieux protégé en cas de gel.

Un autre but de l'invention est de proposer un dispositif de lavage qui reprend pour l'essentiel des éléments de construction existante.

Ce but et d'autres buts et avantages qui apparaîtront au cours de la description qui va suivre sont atteints par le dispositif de lavage de l'invention.

Le dispositif de lavage pour le lavage d'une surface transparente ou réfléchissante, notamment la glace de projecteur d'un véhicule automobile à l'aide d'au moins un gicleur alimenté en liquide de lavage, comprend un organe télescopique avec un corps ayant un sommet et une base avec un embout d'alimentation, une tige ayant une base et une extrémité saillante, la tige étant mobile relativement au corps entre une position de repos où la tige est rétractée dans le corps et une position de service où la tige est en saillie relativement au corps, au moins un gicleur monté sur l'extrémité saillante de la tige, un piston mobile logé dans le corps qui délimite une chambre avant et une chambre arrière, un dispositif de rappel élastique de la tige et du piston en direction de la base du corps vers la position de repos de la tige.

En position de repos la base de la tige est retenue à une distance déterminée de la base du corps, le piston est monté sur un poussoir situé entre la base de la tige et la base du corps. Le poussoir est mobile par rapport à la tige, et il est rappelé élastiquement en direction de la base du corps.

Selon d'autres caractéristiques du dispositif de lavage selon la présente invention :
- une butée limite la course du poussoir en direction de la tige, de manière à ce que lorsque le poussoir arrive en fin de course par rapport à la tige, le poussoir entraîne le déplacement de la tige ;
- le poussoir est rappelé en direction de la base du corps par un ressort de compression situé entre le piston et la base de la tige ;
- le poussoir est rappelé en direction de la base du corps par un ressort de compression en parallèle avec le ressort de compression qui rappelle la tige ;
- le ressort de compression qui rappelle la tige est précontraint dans la position de repos de la tige, de manière à ce que le ressort de compression qui rappelle le poussoir exerce un effort de rappel au maximum de sa compression qui est inférieur à la précontrainte du ressort de compression qui rappelle la tige ;
- le ressort de compression qui rappelle le poussoir a une raideur suffisante pour refouler le liquide de lavage par l'embout d'alimentation.
- le poussoir est guidé relativement à la tige ;
- la tige présente un conduit pour l'alimentation du gicleur, et une colonne de guidage qui prolonge le corps du poussoir est engagée dans la partie inférieure du conduit ;
- le poussoir est traversé par un conduit qui communique avec le conduit de la tige ;
- un dispositif à clapet est situé à la base du poussoir ;

Toutes les caractéristiques supplémentaires du dispositif d'éclairage et /ou de signalisation selon l'invention, dans la mesure où elles ne s'excluent pas mutuellement, sont combinées selon toutes les possibilités d'association pour aboutir à différents exemples de réalisation de l'invention.

L'invention concerne aussi un véhicule comprenant au moins un projecteur selon la présente invention.

L'invention sera mieux comprise en se référant à la description ci-dessous et aux dessins qui lui sont attachés.

La figure 1 est une vue générale d'un dispositif selon l'invention, le porte-gicleur étant représenté dans ses deux positions.

La figure 2 représente le vérin du dispositif de lavage dans son état de repos.

Les figures 3, 4 et 5 illustrent les différents modes de fonctionnement du vérin de la figure 2.

Dans la suite de la description les termes tels que "haut", "bas", base", "sommet" ou autres qui sont employés doivent être interprétés par rapport à la représentation du dispositif dans les dessins et non par rapport à la position du dispositif sur un véhicule. En effet sur un véhicule le dispositif peut être monté en position verticale, horizontale ou autre, selon les contraintes liées à son environnement. Egalement, pour des raisons de clarté il arrive que dans certaines figures les ressorts soient représentés de façon partielle.

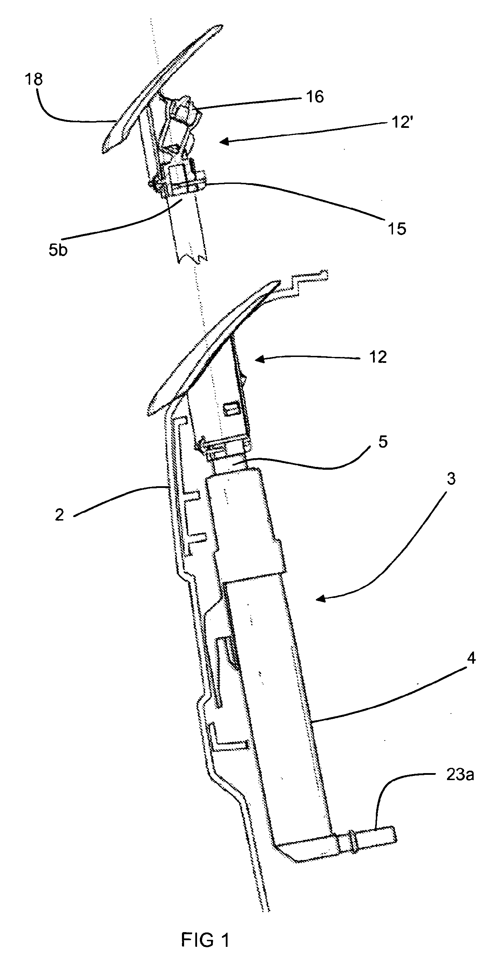

La figure 1 montre un dispositif de lavage monté dans le pare-choc d'un véhicule qu'on a schématisé en 2. Par exemple le dispositif est monté dans le pare-choc à proximité d'un projecteur équipé d'une glace de projecteur.

Le dispositif de lavage comprend un vérin télescopique 3 avec un corps tubulaire 4 qui est fixé solidairement au véhicule par tout moyen approprié, et par exemple des oreilles, ou par des pattes, un collier, une bride ou autre.

Une tige 5 est montée coulissante relativement au corps.

Un porte-gicleur est assemblé à l'extrémité supérieure 5b de la tige 5. Le porte-gicleur est représenté dans la figure 1 en vue de côté dans ses deux positions extrêmes repérées par les références 12 et 12' qui correspondent respectivement aux états de repos et de service du dispositif de lavage. C'est la pression d'alimentation en liquide de lavage qui détermine le passage du dispositif d'un état à l'autre.

De façon connue, le porte-gicleur comprend une monture 15 qui est fixée à l'extrémité 5b de la tige 5. Par exemple la monture 15 du porte-gicleur est assemblée par emmanchement à l'extrémité 5b de la tige 5, et elle est retenue par une épingle élastiquement déformable dont les branches se logent dans des encoches de la monture et de la tige. D'autres modes d'assemblage peuvent aussi convenir.

Un gicleur 16 est assemblé sur la monture 15. Le gicleur est alimenté en liquide de lavage sous pression via la tige 5 et la monture 15, et il est chargé de projeter ce liquide en direction de la glace du projecteur à nettoyer. L'orientation du gicleur et sa distance par rapport à la glace du projecteur sont par ailleurs déterminées pour optimiser les conditions dans lesquelles le liquide de lavage est projeté sur la surface à nettoyer. Ceci est à la portée de l'homme du métier. D'autres modes de construction peuvent aussi convenir, en particulier le ou les gicleurs peuvent former une seule pièce avec le porte-gicleur. On peut équiper aussi le porte-gicleur avec d'autres accessoires pour faire varier l'orientation du jet de liquide au cours du lavage et ainsi améliorer son efficacité. De tels dispositifs sont aussi connus de l'homme du métier.

La monture est chapeautée par un capot 18 qui est plaqué contre le pare-choc dans l'état de repos du dispositif de lavage, masquant ainsi l'ouverture que traverse la tige 5.

D'autres modes de construction du dispositif de lavage et de son environnement sur le véhicule peuvent également convenir.

Le vérin 3 comprend un corps cylindrique 4 qui est fermé au sommet par un bouchon de guidage 22 traversé par la tige de vérin 5 et à la base par un bouchon d'alimentation 23. Le corps, la tige et les bouchons sont réalisés en tout matériau approprié et notamment en matière plastique. Au moins un des bouchons peut être réalisé de façon monobloc avec le reste du corps, ou alors les bouchons sont rapportés sur le corps et ils sont assemblés par tout moyen approprié, notamment par encliquetage, emmanchement, et/ou collage. D'autres modes de construction peuvent également convenir.

La tige de vérin 5 est creuse, elle est traversée longitudinalement par un conduit 26 qui débouche au sommet 5b de la tige pour l'alimentation du gicleur en liquide de lavage. Le bouchon d'alimentation 23 est équipé d'un embout 23a qui débouche vers le fond du vérin, et sur lequel peut être emmanché un tuyau d'alimentation. D'autres modes d'alimentation conviennent également.

La tige de vérin est indexée angulairement par rapport au corps par tout moyen approprié, et par exemple par un méplat longitudinal ou des rainures longitudinales qui coopèrent avec des formes correspondantes du bouchon de guidage 22.

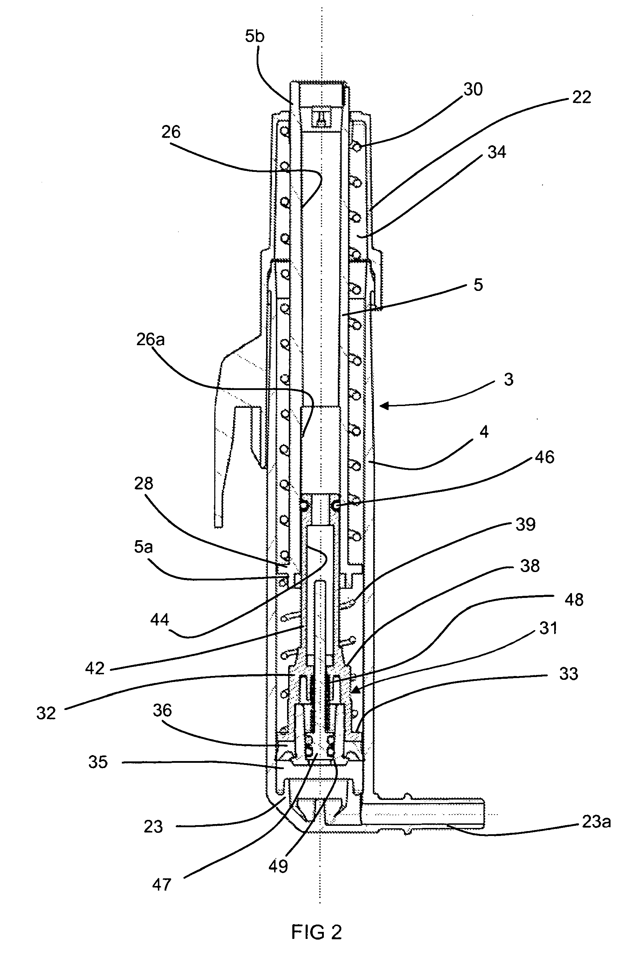

Le vérin 3 est représenté en figure 2 dans sa position de repos, avec la tige 5 rétractée à l'intérieur du corps. En position de service, la collerette 28 vient en butée contre le bouchon de guidage 22. Un ressort de compression 30 logé dans le corps rappelle la tige vers sa position de repos.

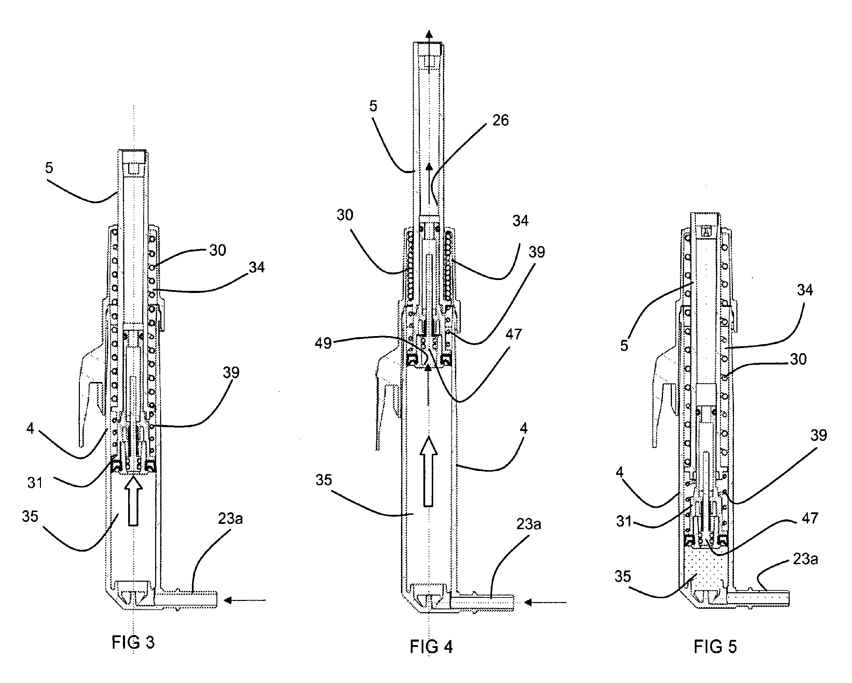

La butée contre le bouchon de guidage pour bloquer la tige 5 en position de service du dispositif de lavage, permet de donner au gicleur une position précise en position et en orientation par rapport à la glace du projecteur. Ce blocage peut être effectué au moyen d'une butée de fin de course. Par exemple, la butée de fin de course est formée par une collerette 28 qui se trouve à la base de la tige 5 et qui coopère avec le bouchon de guidage 22. D'autres moyens conviennent aussi. Par exemple, selon un mode de réalisation particulier, le ressort de compression 30 est amené en compression maximale lorsque le tige vient en position de service, le ressort servant alors de blocage de la tige en position de service ; la fin de course de la tige est ainsi déterminée par la longueur du ressort de compression 30 lorsqu'il est comprimé jusqu'à ce que ses spires soient jointives, comme cela est représenté en figure 4.

La position de repos est marquée par l'application du capot 18 contre le pare-choc du véhicule, ou par tout autre moyen approprié de butée. Dans sa position de repos la tige est maintenue à une distance déterminée du fond de la chambre arrière du vérin. En particulier la base 5a de la tige avec la collerette 28 reste surélevée par rapport au bouchon d'alimentation pour que la tige soit totalement dégagée de la base du vérin. Egalement, en position de repos, le ressort 30 conserve une compression résiduelle de façon à exercer une contrainte permanente sur la tige 5 en direction de la base du vérin.

Une butée de fin de course est prévue pour bloquer la tige 5 en position de service du dispositif de lavage. Par exemple, la butée de fin de course est formée par une collerette 28 qui se trouve à la base de la tige 5 et qui coopère avec le bouchon de guidage 22. D'autres moyens conviennent aussi, et par exemple le ressort de compression 30 qui se trouve à spires jointives. Ainsi, en position de service du vérin, le gicleur occupe une position précise en position et en orientation par rapport à la glace du projecteur.

Un poussoir mobile 31 est monté entre la base 5a de la tige 5 et le fond de la chambre arrière du vérin. Le poussoir comprend un corps de poussoir 32 avec un piston 33. Le piston 33 couvre toute la surface de section du corps 4 du vérin, et de cette façon il délimite une chambre avant 34 et une chambre arrière 35. De préférence, le piston est muni d'un joint périphérique, par exemple un joint à lèvre 36. Le corps 32 du poussoir a une butée qui est prévue pour entrer en contact avec la tige 5 après une course définie. Selon le mode de réalisation illustré, la butée est un épaulement 38 au sommet du corps qui coopère avec la base 5a de la tige 5. Dans la position de repos, l'épaulement est éloigné de la base de la tige d'une distance déterminée qui est la course utile du poussoir 31 relativement à la tige 5.

Un ressort de compression 39 rappelle le poussoir vers la base du vérin 3. Le ressort 39 prend appui sur le piston 33 et la base de la tige, et il exerce son effort de compression entre ces deux éléments. De préférence, la raideur du ressort est choisie pour que le ressort 39 soit apte à repousser le piston au fond du vérin en refoulant par l'embout 23a le liquide de lavage qui se trouve dans la chambre arrière 35. De façon optionnelle la raideur est également choisie de façon que la force de rappel du ressort 39 au maximum de sa compression soit inférieure à la force de précontrainte du ressort 30. De cette façon une sollicitation exercée sur le piston 33 produit la compression des ressorts 39 et 30 l'un après l'autre.

En variante au lieu d'être placés en série les ressorts 30 et 39 pourraient être montés en parallèle, le ressort 39 ayant au repos une longueur supérieure à celle du ressort 30.

De préférence, la tige et le poussoir sont guidés l'un par rapport à l'autre selon la direction longitudinale du vérin. Selon le mode de réalisation illustré, le corps 32 du poussoir se prolonge par une colonne de guidage 42 qui pénètre dans la tige 5 et qui est guidée relativement à la partie inférieure 26a du conduit 26. La colonne 42 est creuse, c'est à dire que le poussoir est traversé par un conduit intérieur 44 qui communique avec le conduit 26 de la tige 5. Un joint 46 assure l'étanchéité entre la tige 5 et la colonne du poussoir. On peut prévoir une butée de retenue de la colonne 42 par rapport à la tige 5 pour empêcher son déboîtement. Par exemple la colonne présente une oreille ou plus en saillie par rapport à sa paroi latérale, qui circule dans un segment de rainure ou de lumière situé dans la paroi de la partie inférieure 26a du conduit 26. D'autres modes de construction conviennent également. Par exemple la colonne 42 est prévue suffisamment longue pour qu'en mode de fonctionnement normal il n'y ait pas de déboîtement possible avec la tige.

De façon optionnelle, un dispositif à clapet mobile situé à la base du poussoir 31 contrôle l'alimentation en liquide de lavage du ou des gicleurs en fonction de la position de la tige. Ce type de construction est connu. Dans le mode de réalisation représenté, le dispositif à clapet comprend un clapet 47 guidé en translation par rapport au poussoir 31 et rappelé par un ressort 48 vers la base du vérin en direction d'un siège de clapet 49. La raideur du ressort est choisie pour que le clapet s'ouvre sous l'action de la pression d'eau lorsque le poussoir et la tige sont arrivés en position de service, c'est à dire en fin de course de compression des ressorts 30 et 39.

Le dispositif qui vient d'être décrit fonctionne de la façon suivante. En position de repos, la tige est rétractée dans le vérin, le poussoir est rappelé au fond de la chambre arrière 36 comme cela est représenté en figure 2.

Le passage du dispositif vers sa position de service sous l'effet d'une alimentation sous pression de liquide de lavage se déroule en plusieurs temps. Dans un premier temps, le poussoir 31 remonte en butée contre la tige 5 puis entraîne la tige vers le sommet du vérin. Ceci est illustré en figure 3. Dans un deuxième temps, le poussoir 31 et la tige 5 remontent vers le sommet du corps. Dans un troisième temps, la tige arrive en butée au sommet du corps, le clapet 47 à la base du poussoir s'ouvre, ce qui permet le passage du liquide de lavage sous pression jusqu'au(x) gicleur(s) au travers du poussoir et de la tige. Ceci est illustré dans la figure 4.

Lorsque l'alimentation en liquide de lavage cesse, le clapet se referme, la tige 5 se rétracte, le poussoir avec le piston s'éloigne de la tige et redescend au fond du vérin sous l'action des différents ressorts de compression 30, 39 et 48, et le liquide qui se trouve dans la chambre arrière 36 est refoulé par l'embout d'alimentation 23a en amont du circuit d'alimentation.

En cas de gel du liquide qui se trouve dans cette chambre arrière, le poussoir 31 remonte sous l'effet de l'augmentation de volume du liquide en question. La remontée du poussoir est reprise par le ressort de compression 39 sans avoir d'action directe sur le déplacement de la tige 5. Ce mode de fonctionnement est illustré en figure 5. Ainsi, le porte-gicleur reste en position jusqu'à ce que l'admission de liquide de lavage dans la chambre arrière 35 retrouve une fluidité au moins partielle.

La chambre arrière 35 du vérin présente dans ces conditions un volume variable qui permet d'éviter une sortie indésirable de la tige et du porte-gicleur en cas de gel du liquide présent dans la chambre arrière.

Ce mode de construction est en outre intéressant car sa mise en oeuvre peut être obtenue avec peu de modifications par rapport à un mode de construction existant. En effet, on peut construire un dispositif selon l'invention en transformant seulement la tige et le piston d'un dispositif existant.

Naturellement la description de l'invention qui vient d'être faite n'est donnée qu'à titre indicatif, et l'on pourrait adopter d'autres mises en oeuvre de l'invention sans pour autant sortir du cadre des revendications.

## Revendications

1. Dispositif de lavage pour le lavage d'une surface transparente ou réfléchissante, notamment la glace de projecteur d'un véhicule automobile à l'aide d'au moins un gicleur (16) alimenté en liquide de lavage, comprenant un organe télescopique (3) avec un corps (4) ayant un sommet et une base avec un embout d'alimentation (23a), une tige (5) ayant une base (5a) et une extrémité saillante (5b), la tige étant mobile relativement au corps entre une position de repos où la tige est rétractée dans le corps et une position de service où la tige est en saillie relativement au corps, au moins un gicleur (16) monté sur l'extrémité saillante de la tige, un piston (33) mobile logé dans le corps qui délimite une chambre avant (34) et une chambre arrière (35), un dispositif de rappel élastique (30) de la tige et du piston en direction de la base du corps vers la position de repos de la tige, dans la position de repos la base (5a) de la tige (5) est retenue à une distance déterminée de la base du corps (4), le piston (33) est monté sur un poussoir (31) situé entre la base de la tige et la base du corps et le poussoir (31) est mobile par rapport à la tige (5), **caractérisé par le fait que** le poussoir (31) est rappelé élastiquement en direction de la base du corps.

2. Dispositif de lavage selon la revendication 1, **caractérisé par le fait qu'**une butée (38) limite la course du poussoir en direction de la tige, de manière à ce que lorsque le poussoir arrive en fin de course par rapport à la tige, le poussoir entraîne le déplacement de la tige.

3. Dispositif selon la revendication 1 ou 2, **caractérisé par le fait que** le poussoir est rappelé en direction de la base du corps par un ressort de compression (39) situé entre le piston (33) et la base (5a) de la tige (5).

4. Dispositif selon la revendication 1 ou 2, **caractérisé par le fait que** le poussoir est rappelé en direction de la base du corps par un ressort de compression en parallèle avec le ressort de compression (30) qui rappelle la tige.

5. Dispositif selon la revendication 3 ou 4, **caractérisé par le fait que** le ressort de compression (30) qui rappelle la tige est précontraint dans la position de repos de la tige, de manière à ce que le ressort de compression (39) qui rappelle le poussoir (31) exerce un effort de rappel au maximum de sa compression qui est inférieur à la précontrainte du ressort de compression (30) qui rappelle la tige.

6. Dispositif selon la revendication précédente, **caractérisé par le fait que** le ressort de compression (39) qui rappelle le poussoir (31) a une raideur suffisante pour refouler le liquide de lavage par l'embout d'alimentation (23a).

7. Dispositif selon l'une quelconque des revendications précédentes, **caractérisé par le fait que** le poussoir (31) est guidé relativement à la tige (5).

8. Dispositif selon la revendication précédente, **caractérisé par le fait que** la tige (5) présente un conduit (26) pour l'alimentation du gicleur, et qu'une colonne de guidage (42) qui prolonge le corps du poussoir (31) est engagée dans la partie inférieure (26a) du conduit (26).

9. Dispositif selon la revendication précédente, **caractérisé par le fait que** le poussoir (31) est traversé par un conduit (44) qui communique avec le conduit (26) de la tige.

10. Dispositif selon la revendication précédente, **caractérisé par le fait qu'**un dispositif à clapet (47) est situé à la base du poussoir (31).

11. Projecteur ayant une surface transparente ou réfléchissante, **caractérisé par le fait qu'**il comprend un dispositif de lavage selon l'une quelconque des revendications précédentes.

## Claims

1. Washing device for washing a transparent or reflective surface, in particular the headlight glass of a motor vehicle, by means of at least one nozzle (16) which is supplied with washing fluid, comprising a telescopic unit (3) with a body (4) which has a top and a base with a supply joining piece (23a), a rod (5) with a base (5a) and a projecting end (5b), the rod being mobile relative to the body, between a position of rest in which the rod is retracted into the body, and a position of service in which the rod projects relative to the body, at least one nozzle (16) which is fitted on the projecting end of the rod, a mobile piston (33) which is accommodated in the body, which delimits a front chamber (34) and a rear chamber (35), a device (30) for resilient return of the rod and the piston in the direction of the base of the body, towards the position of rest of the rod, in the position of rest the base (52) of the rod (5) is retained at a predetermined distance from the base of the body (4), the piston (33) is fitted on a thruster (31) which is situated between the base of the rod and the base of the body, and the thruster (31) is mobile relative to the rod (5), **characterised in that** the thruster (31) is returned resiliently in the direction of the base of the body.

2. Washing device according to claim 1, **characterised in that** a stop (38) limits the course of the thruster in the direction of the rod, such that, when the thruster arrives at the end of travel relative to the rod, the thruster gives rise to the displacement of the rod.

3. Device according to claim 1 or 2, **characterised in that** the thruster is returned in the direction of the base of the body by a compression spring (39) which is situated between the piston (33) and the base (5a) of the rod (5).

4. Device according to claim 1 or 2, **characterised in that** the thruster is returned in the direction of the base of the body by a compression spring in parallel with the compression spring (30) which returns the rod.

5. Device according to claim 3 or claim 4, **characterised in that** the compression spring (30) which returns the rod is pre-compressed in the position of rest of the rod, such that the compression spring (39) which returns the thruster (31) exerts a return force at its maximum compression, which is less than the pre-compression of the compression spring (30) which returns the rod.

6. Device according to the preceding claim, **characterised in that** the compression spring (39) which returns the thruster (31) has rigidity which is sufficient to force the washing fluid back via the supply joining piece (23a).

7. Device according to any one of the preceding claims, **characterised in that** the thruster (31) is guided relative to the rod (5).

8. Device according to the preceding claim, **characterised in that** the rod (5) has a duct (26) for the supply to the nozzle, and **in that** a guide column (42) which extends the body of the thruster (31) is engaged in the lower part (26a) of the duct (26).

9. Device according to the preceding claim, **characterised in that** a duct (44) which communicates with the duct (26) of the rod passes through the thruster (31).

10. Device according to the preceding claim, **characterised in that** a flap-valve device (47) is situated at the base of the thruster (31).

11. Headlight with a transparent or reflective surface, **characterised in that** it comprises a washing device according to any one of the preceding claims.

## Patentansprüche

1. Reinigungsvorrichtung zum Reinigen einer durchsichtigen oder reflektierenden Oberfläche, insbesondere der Scheinwerferscheibe eines Kraftfahrzeugs, mit Hilfe wenigstens einer mit Reinigungsflüssigkeit gespeisten Spritzdüse (16), mit einem Teleskoporgan (3) mit einem Korpus (4), der ein Oberteil und eine Basis mit einem Speiseansatzstück (23a) aufweist, einer Stange (5), die eine Basis (5a) und ein vorstehendes Ende (5b) aufweist, wobei die Stange bezüglich des Korpus zwischen einer Ruhestellung, in der die Stange in den Korpus eingefahren ist, und einer Arbeitsstellung, in der die Stange bezüglich des Korpus vorsteht, beweglich ist, wenigstens einer am vorstehenden Ende der Stange montierten Spritzdüse (16), einem im Korpus lagernden beweglichen Kolben (33), der eine vordere Kammer (34) und eine hintere Kammer (35) begrenzt, einer Vorrichtung (30) zum elastischen Rückstellen der Stange und des Kolbens in Richtung der Korpusbasis in die Ruhestellung der Stange, wobei die Basis (5a) der Stange (5) in der Ruhestellung in einem bestimmten Abstand zur Basis des Korpus (4) gehalten ist, der Kolben (33) auf einem zwischen der Stangenbasis und der Korpusbasis angeordneten Stößel (31) montiert ist und der Stößel (31) bezüglich der Stange (5) beweglich ist,
**dadurch gekennzeichnet, dass** der Stößel (31) elastisch in Richtung der Korpusbasis zurückgestellt wird.

2. Reinigungsvorrichtung nach Anspruch 1,
**dadurch gekennzeichnet, dass** ein Anschlag (38) den Weg des Stößels in Richtung der Stange so begrenzt, dass der Stößel, wenn er bezüglich der Stange die Endstellung erreicht, das Verschieben der Stange bewirkt.

3. Vorrichtung nach Anspruch 1 oder 2,
**dadurch gekennzeichnet, dass** der Stößel durch eine Druckfeder (39), die zwischen dem Kolben (33) und der Basis (5a) der Stange (5) angeordnet ist, in Richtung der Korpusbasis zurückgestellt wird.

4. Vorrichtung nach Anspruch 1 oder 2,
**dadurch gekennzeichnet, dass** der Stößel durch eine Druckfeder zusammen mit der Druckfeder (30), die die Stange zurückstellt, in Richtung der Korpusbasis zurückgestellt wird.

5. Vorrichtung nach Anspruch 3 oder 4,
**dadurch gekennzeichnet, dass** die die Stange zurückstellende Druckfeder (30) in der Ruhestellung der Stange so vorgespannt ist, dass die den Stößel (31) zurückstellende Druckfeder (39) im Maximum ihrer Komprimierung eine Rückstellkraft ausübt, die kleiner ist als die Vorspannung der Druckfeder (30), die die Stange zurückstellt.

6. Vorrichtung nach dem vorhergehenden Anspruch,
**dadurch gekennzeichnet, dass** die Steifigkeit der den Stößel (31) zurückstellenden Druckfeder (39) dazu ausreicht, die Reinigungsflüssigkeit durch das Speiseansatzstück (23a) zurückzudrängen.

7. Vorrichtung nach einem der vorhergehenden Ansprüche,
**dadurch gekennzeichnet, dass** der Stößel (31) relativ zur Stange (5) geführt ist.

8. Vorrichtung nach einem der vorhergehenden Ansprüche,
**dadurch gekennzeichnet, dass** die Stange (5) eine Leitung (26) zum Speisen der Spritzdüse aufweist, und dass eine Führungssäule (42), die den Korpus des Stößels (31) verlängert, in den unteren Teil (26a) der Leitung (26) eingeführt ist.

9. Vorrichtung nach dem vorhergehenden Anspruch,
**dadurch gekennzeichnet, dass** der Stößel (31) von einer Leitung (44) durchquert wird, die mit der Leitung (26) der Stange kommuniziert.

10. Vorrichtung nach dem vorhergehenden Anspruch,
**dadurch gekennzeichnet, dass** eine Ventilvorrichtung (47) an der Basis des Stößels (31) angeordnet ist.

11. Scheinwerfer mit einer durchsichtigen oder reflektierenden Oberfläche,
**dadurch gekennzeichnet, dass** er eine Reinigungsvorrichtung nach einem der vorhergehenden Ansprüche umfasst.
